# EUROPÄISCHE PATENTANMELDUNG

(11) **EP 1 217 683 A2**
(43) Veröffentlichungstag der Anmeldung: **26.06.2002**
(21) Anmeldenummer: 01125605.4
(22) Anmeldetag: 26.10.2001
(51) Int. Cl.: H01P 1/08, G01F 23/284

(54) **Mikrowellenfenster**

(30) Priorität: 01.12.2000 DE 10060069
(71) Anmelder: KROHNE MESSTECHNIK GMBH & CO. KG, 47058 Duisburg (DE)
(72) Erfinder: Lübbers, Wilhelm, 26904 Börger (DE)
(74) Vertreter: Gesthuysen, von Rohr & Eggert

(57) **Zusammenfassung**

Dargestellt und beschrieben ist ein Mikrowellenfenster zur räumlichen Trennung und mikrowellennmäßigen Verbindung eines äußeren Mikrowellenleiters von bzw. mit einem inneren Mikrowellenleiter oder einem Hornstrahler, mit einer mikrowellendurchlässigen Durchlaßscheibe und mit einem der Befestigung der Durchlaßscheibe dienenden metallischen Befestigungsmittel.

Erfindungsgemäß ist vorgesehen, daß das Befestigungsmittel mit einem Dielektrikum beschichtet ist und die Durchlaßscheibe über das Dielektrikum in das Befestigungsmittel eingeschmolzen oder eingeklebt ist. Dadurch wird eine spannungsfreie Befestigung der Durchlaßscheibe in dem metallischen Befestigungsmittel bei gleichzeitiger hermetischer Dichtigkeit des Mikrowellenfensters erzielt.

## Beschreibung

Die Erfindung betrifft ein Mikrowellenfenster zur räumlichen Trennung und mikrowellenmäßigen Verbindung eines äußeren Mikrowellenleiters von bzw. mit einem inneren Mikrowellenleiter oder einem Hornstrahler, mit einer mikrowellendurchlässigen Durchlaßscheibe und mit einem der Befestigung der Durchlaßscheibe dienenden metallischen Befestigungsmittel. Ein solches Mikrowellenfenster ist z.B. aus der DE 195 42 525 A1 bekannt.

Mikrowellenfenster der in Rede stehenden Art dienen im allgemeinen zur Trennung einer Mikrowellensendeeinrichtung von einem in der Regel in einem Behälter befindlichen flüssigen oder festen Medium. Derartige Anordnungen werden insbesondere für Füllstandsmessungen nach dem Radarprinzip in industriellen Anlagen verwendet. Für derartige industrielle Füllstandsmeßsysteme werden in der Regel spezifische Anforderungen an die mechanischen Teile gestellt, die mit dem Medium im Behälter bzw. der zugehörigen Atmosphäre in Berührung kommen können. In einem solchen Behälter können Unterdrücke oder sehr hohe Überdrücke, explosive Atmosphären, sehr hohe oder sehr niedrige Temperaturen sowie aggressive und/oder korrossive Medien vorhanden sein. Das Mikrowellenfenster dient dazu, die Mikrowellensendeeinrichtung mit ihren empfindlichen elektronischen Bauteilen vor den Einflüssen der Verhältnisse in dem das Medium aufnehmenden Behälter zu schützen.

Bei dem gattungsgemäßen Mikrowellenfenster ist vorgesehen, daß eine mikrowellendurchlässige, gläserne oder keramische Durchlaßscheibe in einem metallischen Befestigungsmittel befestigt ist, indem die Durchlaßscheibe in das Befestigungsmittel eingeschmolzen bzw. eingesintert ist. Bei dem Befestigungsmittel für die Durchlaßscheibe kann es sich einerseits um ein solches Bauteil handeln, dessen einzige Funktion in der Halterung der Durchlaßscheibe besteht, andererseits kann das Befestigungsmittel auch von einer Wand z.B. eines Behälters gebildet werden, wobei der äußere Mikrowellenleiter und der innere Mikrowellenleiter auf einander gegenüberliegenden Seiten dieser Wand vorgesehen sind. Auf diese Weise wird eine druckdichte, jedoch mikrowellendurchlässige Trennung der beiden einander gegenüberligenden Mikrowellenleiter erzielt, bei der darüber hinaus die Durchlaßscheibe spannungsfrei eingebaut ist, also kräftemäßig selbst nicht beansprucht wird. Die Mikrowellensendeeinrichtung selbst ist somit durch die in das Befestigungsmittel eingeschmolzene bzw. eingesinterte Durchlaßscheibe von den Bedingungen in dem Behälter, in dem sich das Medium befindet, abgetrennt. Aggressive und/oder korrossive Medien können somit der Mikrowellensendeeinrichtung nichts anhaben.

Beim Einschmelzen einer gläsernen Durchlaßscheibe bzw. beim Einsintern einer keramischen Durchlaßscheibe in das Befestigungsmittel kommt die druckdichte Verbindung der Durchlaßscheibe mit dem Befestigunsmittel dadurch zustande, daß sich das Material der Durchlaßscheibe einerseits mit dem Material des Befestigungsmittels andererseits in geeigneter Form "verbindet". Diese "Verbindung" ist von der Druckdichtigkeit her beim Einsintern besser als beim Einschmelzen, jedoch sind für das Einsintern deutlich höhere Temperaturen erforderlich, nämlich bis zu 80 % der Schmelztemperatur der für die Durchlaßsscheibe verwendeten Keramik.

Somit ist es die Aufgabe der Erfindung, ein solches Mikrowellenfenster bereitzustellen, das eine hermetisch dichte Trennung bzw. Verbindung eines äußeren Mikrowellenleiters mit einem inneren Mikrowellenleiter bzw. einem Hornstrahler ermöglicht, wobei die Befestigung der Durchlaßscheibe auf einfache und sichere Weise realisierbar ist.

Das erfindungsgemäße Mikrowellenfenster, bei dem die zuvor aufgezeigte und hergeleitete Aufgabe gelöst ist, ist ausgehend von dem eingangs beschriebenen gattungsgemäßen Mikrowellenfenster dadurch gekennzeichnet, daß das Befestigungsmittel mit einem Dielektrikum beschichtet ist und die Durchlaßscheibe über das Dielektrikum in das Befestigungsmittel eingeschmolzen oder eingeklebt ist.

Wie bei dem gattungsgemäßen Mikrowellenfenster kann dabei das Befestigungsmittel z.B. eine Halterung sein, die eigens und ausschließlich für die Halterung der Durchlaßscheibe vorgesehen ist, andererseits jedoch auch die Wand eines Behälters, in den das Medium eingefüllt ist. Als mikrowellendurchlässige Durchlaßscheiben sind - wie auch im Stand der Technik - im wesentlichen solche Durchlaßscheiben geeignet, die aus Glas oder Keramik bestehen. Deren Form ist grundsätzlich beliebig, vorzugsweise sind die Durchlaßscheiben jedoch im wesentlichen kreisförmig, besonders bevorzugt kreisrund.

Erfindungsgemäß ist also vorgesehen, daß wenigstens die Oberfläche des Bereichs des Befestigungsmittels, in dem die Durchlaßscheibe in das Befestigungsmittel eingesetzt wird, mit dem Dielektrikum beschichtet ist. Die in das Befestigungsmittel eingesetzte Durchlaßscheibe steht somit nicht in direktem Kontakt mit der Durchlaßscheibe, sondern ist mit dieser mittelbar über das Dielektrikum verbunden. Diese Verbindung erfolgt dabei entweder mittels eines separaten Klebers oder aber durch ein Einschmelzen der Durchlaßscheibe in die mit dem Dielektrikum beschichtete Ausnehmung in dem Befestigungsmittel. Ein solches Einschmelzen der Durchlaßscheibe umfaßt dabei ein Anschmelzen des Dielektrikums, ein Anschmelzen der Durchlaßscheibe, aber auch ein gleichzeitiges Anschmelzen sowohl des Dielektrikums als auch der Durchlaßscheibe. Erfindungsgemäß wird somit ein solches Mikrowellenfenster erzielt, bei dem auf einfache und verläßliche Weise die Durchlaßscheibe praktisch spannungsfrei, also ohne kräftemäßige Beanspruchung, in dem Befestigungsmittel druckdicht befestigt ist.

Erfindungsgemäß ist grundsätzlich schon die zuvor angesprochene Teilbeschichtung des Befestigungsmittels mit dem Dielektrikum ausreichend. Gemäß einer bevorzugten Weiterbildung der Erfindung ist jedoch vorgesehen, daß das Befestigungsmittel wenigstens auf seiner dem inneren Mikrowellenleiter bzw. dem Hornstrahler zugewandten Seite vollständig mit dem Dielektrikum beschichtet ist. Ganz besonders bevorzugt ist es in diesem Zusammenhang jedoch, das Befestigungsmittel vollständig mit dem Dielektrikum zu beschichten. Ist auf der dem äußeren Mikrowellenleiter gegenüberliegenden Seite des Mikrowellenfensters ein Hornstrahler vorgesehen, so kann grundsätzlich ein solcher Hornstrahler verwendet werden, dessen Oberfläche unbeschichtet ist. Gemäß einer bevorzugten Weiterbildung der Erfindung ist jedoch vorgesehen, daß auch die Oberfläche des Hornstrahler - vorzugsweise vollständig - mit einem Dielektrium beschichtet ist. Auf diese Weise wird neben der erfindungsgemäßen Einfachheit und Verläßlichkeit der Befestigung der Durchlaßscheibe in dem Befestigungsmittel zusätzlich ein guter Korrosionsschutz des Befestigungsmittels bzw. des Hornstrahles erzielt.

Sowohl bei der Beschichtung des Befestigungsmittels als auch bei der Beschichtung des Hornstrahlers mit dem Dielektrikum soll die Schichtdicke des Dielektrikums 2 mm nicht überschreiten, um keine derart hohen Aufladungen des Dielektrikums zu ermöglichen, die mit den vorgeschriebenen Explosionsschutzmaßnahmen nicht vereinbar wären. Bevorzugte Materialien für das Dielektrikum sind Kunststoff, wie PTFE, PFA, FEP oder PVDF, und Email. Insbesondere bei der Verwendung von Email als Dielektrikum ist die spannungsfreie Aufnahme der Durchlaßscheibe in dem Befestigungsmittel besonders vorteilhaft, da somit kein Abplatzen der Email-Schicht von der Durchlaßscheibe zu befürchten ist. Erfindungsgemäß wird die Durchlaßscheibe ja nicht durch einen Spann- oder Pressitz in dem Befestigungsmittel gehalten, sondern dadurch, daß die Durchlaßscheibe über das Dielektrikum, vorliegend also das Email, in das Befestigungsmittel eingeschmolzen oder eingeklebt ist.

Gemäß einer bevorzugten Weiterbildung der Erfindung kann das Mikrowellenfenster im Hinblick auf seine Durchlässigkeit für Mikrowellenstrahlung dadurch verbessert sein, daß die Dicke der Durchlaßscheibe ein ganzzahliges Vielfaches der Wellenlänger der Mikrowellen beträgt. Bei einer solchen Anpassung der Dicke der Durchlaßscheibe müssen natürlich die Dielektrizitätszahl des Materials der Durchlaßscheibe und die Ausbreitungsgeschwindigkeit der Mikrowellenstrahlung innerhalb der Mikrowellenleiter berücksichtigt werden. Gemäß einer anderen bevorzugten Weiterbildung der Erfindung kann die Durchlässigkeit des Mikrowellenfensters für Mikrowellenstrahlung ferner dadurch verbessert sein, daß zur Anpassung des Wellenwiderstandes der Durchlaßscheibe an den Wellenwiderstand der Mikrowellenleiter bzw. des Hornstrahlers wenigsten ein einstückig angeformter Anpassungskörper an der Durchlaßscheibe vorgesehen ist. Durch die einstückige Ausführung der Durchlaßscheibe mit dem Anpassungskörper entfallen Übergänge zwischen der Durchlaßscheibe und dem Anpassungskörper, so daß einerseits mit solchen Übergängen verbundene Reflexionen der Mikrowellenstrahlung im Bereich des Mikrowellenfensters vermieden werden und andererseits zwischen der Durchlaßscheibe und dem Anpassungskörper keine Zwischenbereiche vorhanden sind, in die ein aggressives und/oder korrossives Medium eindringen kann.

Muß das erfindungsgemäße Mikrowellenfenster besonders hohen Druckunterschieden standhalten, wird also das erfindungsgemäße Mikrowellenfenster von einer Seite her mit einem deutlichen Über- bzw. Unterdruck beaufschlagt, so ist gemäß einer bevorzugten Weiterbildung der Erfindung vorgesehen, daß die Durchlaßscheibe in dem Befestigungsmittel wenigstens in einer Richtung einer Normalen der Durchlaßscheibe mittels Formschluß gehalten ist. Daß die Durchlaßscheibe in dem Befestigungsmittel wenigstens in einer Richtung einer Normalen der Durchlaßscheibe mittels Formschluß gehalten ist, bedeutet im Zusammenhang mit der vorliegenden Erfindung, daß die Durchlaßscheibe zwar über das Dielektrikum in das Befestigungsmittel eingeklebt bzw. eingeschmolzen und damit spannungsfrei und ohne auf die Durchlaßscheibe wirkende Kräfte in dem Befestigungsmittel gehalten ist, daß jedoch, um ein Herausspringen der Durchlaßscheibe aus dem Befestigungsmittel aufgrund des vorherschenden hohen Druckunterschieds zu vermeiden, gemäß der in Rede stehenden bevorzugten Weiterbildung der Erfindung vorgesehen ist, daß eine entsprechende Bewegung der Durchlaßscheibe längs des Druckgradienten durch eine formschlüssige Halterung der Durchlaßscheibe in dem mit dem Dielektrikum beschichteten Befestigungsmittel vermieden wird.

Konkret ist z.B. eine solche Weiterbildung des erfindungsgemäßen Mikrowellenfensters möglich, bei der die Durchlaßscheibe kreisförmig ist und auf der Seite, auf der sie durch Formschluß gehalten ist, einen geringeren Durchmesser aufweist als auf der gegenüberliegenden Seite. Die Beaufschlagung mit dem höheren Druck erfolgt dann auf der Seite, auf der die Durchlaßscheibe den größeren Durchmesser aufweist. Insbesondere ist also eine solche Weiterbildung denkbar, bei der die Durchlaßscheibe eine konische Form oder einen stufigen Rand aufweist.

Im einzelnen gibt es nun eine Vielzahl von Möglichkeiten, das erfindungsgemäße Mikrowellenfenster auszugestalten und weiterzubilden. Dazu wird auf die dem Patentanspruch 1 nachgeordneten Patentansprüche sowie auf die nachfolgende detaillierte Beschreibung bevorzugter Ausführungsbeispiele der Erfindung unter Bezugnahme auf die Zeichnung verwiesen. In der Zeichnung zeigt
- Fig. 1: ein Mikrowellenfenster gemäß einem ersten bevorzugten Ausführungsbeispiel der Erfindung im Schnitt,
- Fig. 2: ein Mikrowellenfenster gemäß einem zweiten bevorzugten Ausführungsbeispiel der Erfindung im Schnitt,
- Fig. 3: ein Mikrowellenfenster gemäß einem dritten bevorzugten Ausführungsbeispiel der Erfindung im Schnitt,
- Fig. 4: ein Mikrowellenfenster gemäß einem vierten bevorzugten Ausführungsbeispiel der Erfindung im Schnitt und
- Fig. 5: ein Mikrowellenfenster gemäß einem fünften bevorzugten Ausführungsbeispiel der Erfindung im Schnitt.

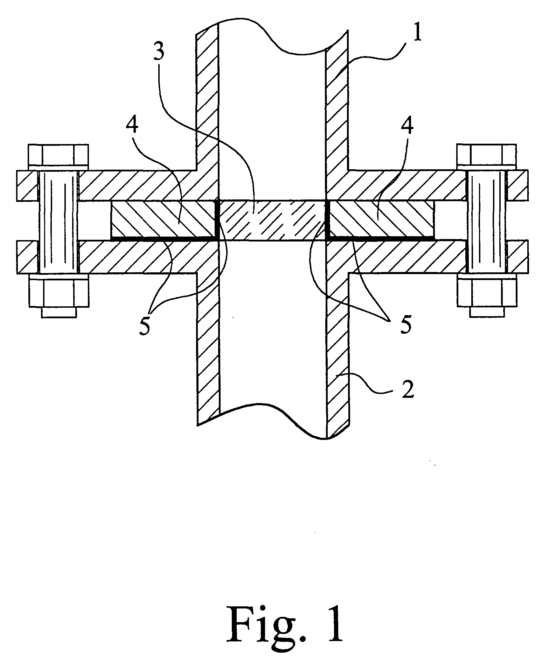

Aus Fig. 1 ist ein Mikrowellenfenster gemäß einem ersten bevorzugten Ausführungsbeispiel der Erfindung ersichtlich, das zur räumlichen Trennung und mikrowellenmäßigen Verbindung eines äußeren Mikrowellenleiters 1 mit einem inneren Mikrowellenleiter 2 dient. Eine mikrowellendurchlässige Durchlaßscheibe 3 aus Glas ist in einem metallischen Befestigungsmittel 4 angeordnet und bildet zusammen mit diesem das eigentliche Mikrowellenfenster. Gemäß dem ersten bevorzugten Ausführungsbeispiel der Erfindung sind sowohl die Durchlaßscheibe 3 als auch das metallische Befestigungsmittel 4 rund ausgeführt. Dementsprechend ist in dem metallischen Befestigungsmittel 4 zur Aufnahme der Durchlaßscheibe 3 eine kreisrunde Bohrung vorgesehen. Die diese Borhrung begrenzende Oberfläche des metallischen Befestigungsmittels 4 sowie dessen dem inneren Mikrowellenleiter 2 zugewandte Oberfläche sind mit einem Dielektrikum 5 beschichtet, das vorliegend von einer Email-Schicht gebildet wird.

Die Befestigung der Durchlaßscheibe 3 in dem metallischen Befestigungsmittel 4 ist gemäß dem ersten bevorzugten Ausführungsbeispiel der Erfindung dadurch erfolgt, daß die Email-Schicht im Bereich der Bohrung in dem metallischen Befestigungsmittel 4 angeschmolzen und die gläserne Durchlaßscheibe 3 in die Ausnehmung mit der angeschmolzenen Email-Schicht eingesetzt worden ist, so daß nach dem Abkühlen der Email-Schicht eine mechanisch feste Halterung der Durchlaßscheibe 3 in dem metallischen Befestigungsmittel 4 erzielt worden ist. Diese Verbindung ist darüber hinaus hermetisch dicht, also auch druckdicht, während gleichzeitig eine spannungsfreie Halterung der Durchlaßscheibe 3 in dem metallischen Befestigungsmittel 4 gewährleistet ist. Schließlich wird durch die Email-Schicht auf dem metallischen Befestigungsmittel 4 erreicht, daß chemisch aggressive und/oder korossive Medien das metallische Befestigungsmittel 4 nicht angreifen können.

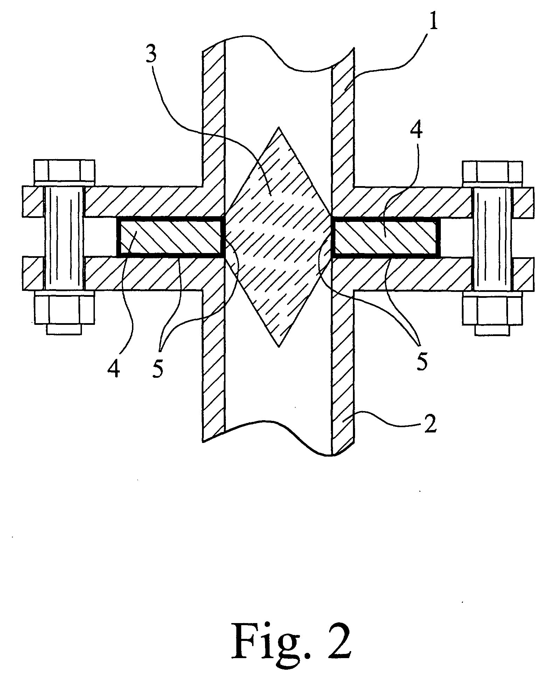

Aus Fig. 2 ist nun ein Mikrowellenfenster gemäß einem zweiten bevorzugten Ausführungsbeispiel der Erfindung ersichtlich. Bei diesem Mikrowellenfenster ist eine vollständige Beschichtung der Oberfläche des Befestigungsmittels 4 mit Email vorgesehen. Außerdem wird eine solche gläserne Durchlaßscheibe 3 verwendet, die sowohl auf ihrer dem äußeren Mikrowellenleiter 1 als auch auf ihrer dem inneren Mikrowellenleiter 2 zugewandten Seite jeweils einen einstückig mit der Durchlaßscheibe 3 ausgebildeten Anpassungskörper aufweist. Durch diese Anpassungskörper ist die Durchlässigkeit des Mikrowellenfensters für Mikrowellenstrahlung verbessert, da der Wellenwiderstand der Durchlaßscheibe 3 an den Wellenwiderstand der Mikrowellenleiter 1, 2 angepaßt ist.

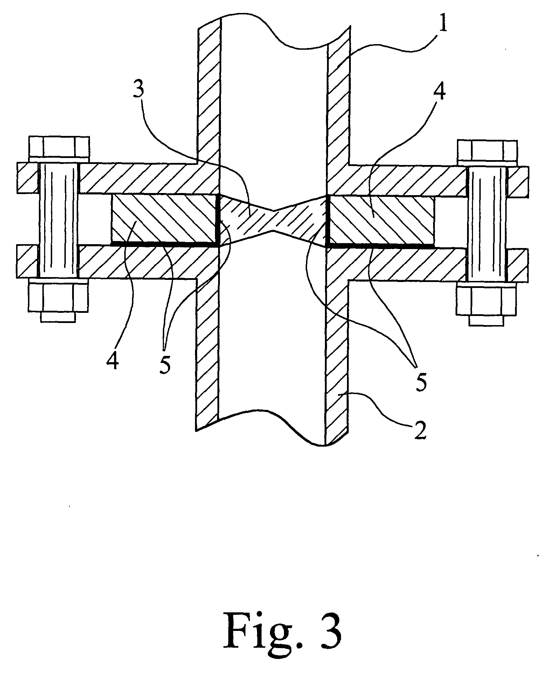

Während bei dem aus Fig. 2 ersichtlichen Mikrowellenfenster gemäß dem zweiten bevorzugten Ausführungsbeispiel der Erfindung im wesentlichen kegelförmige Anpassungskörper vorgesehen sind, ist in Fig. 3 ein Mikrowellenfenster gemäß einem dritten bevorzugten Ausführungsbeispiel der Erfindung dargestellt, bei dem die Durchlaßscheibe 3 sowohl auf ihrer zum äußeren Mikrowellenleiter 1 gewandten Seite als auch auf ihrer zum inneren Mikrowellenleiter 2 gewandten Seite eine im wesentlichen kegelförmige Ausnehmung aufweist, die ebenfalls zur Anpassung des Wellenwiderstandes der Durchlaßscheibe 3 an den Wellenwiderstand der Mikrowellenleiter 1, 2 dient.

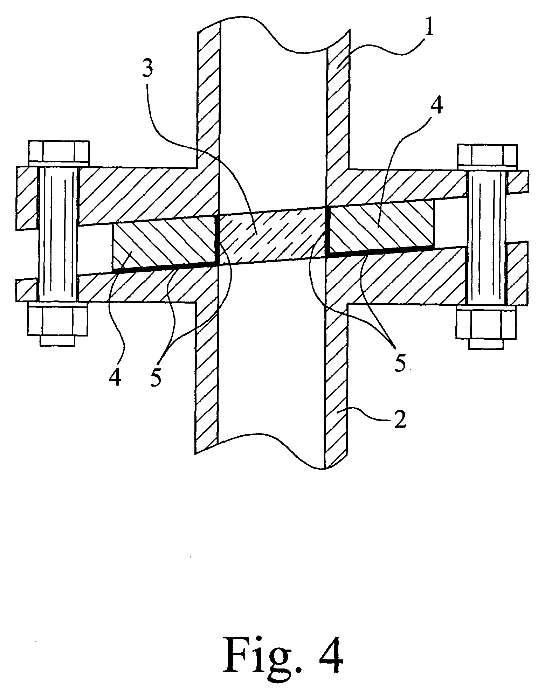

Aus Fig. 4 geht nun ein Mikrowellenfenster gemäß einem vierten bevorzugten Ausführungsbeispiel der Erfindung hervor, bei dem eine Anpassung des Wellenwiderstands der Durchlaßscheibe 3 an den Wellenwiderstand der Mikrowellenleiter 1, 2 dadurch erzielt wird, daß relativ zur Längsachse der Mikrowellenleiter 1, 2 das Mikrowellenfenster nicht senkrecht, sondern schräg zwischen die beiden Mikrowellenleiter 1, 2 eingebaut ist.

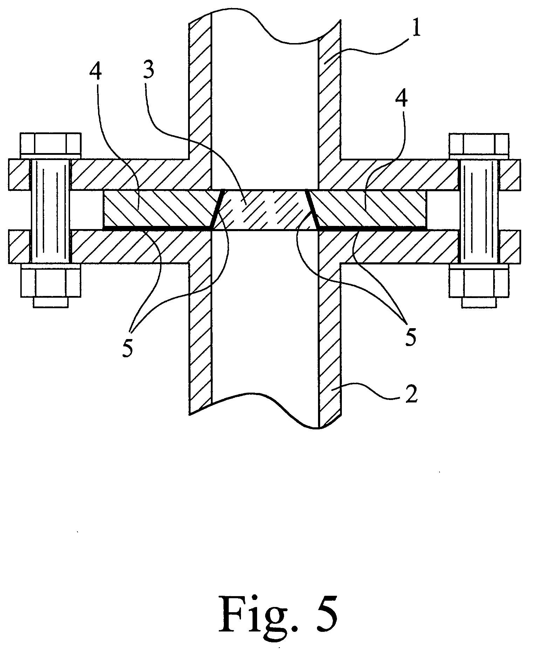

Aus Fig. 5 schließlich ist ein Mikrowellenfenster gemäß einem fünften bevorzugten Ausführungsbeispiel der Erfindung ersichtlich, bei dem die Maßnahme realisiert ist, daß die Durchlaßscheibe 3 in dem Befestigungsmittel 4 wenigstens in einer Richtung einer Normalen der Durchlaßscheibe 3 mittels Formschluß gehalten ist. Gemäß dem fünften bevorzugten Ausführungsbeispiel der Erfindung kann die Durchlaßscheibe 3 nämlich nicht nach oben, also in Richtung zum äußeren Mikrowellenleiter 1 hin, ausweichen, da die Durchlaßscheibe 3 konisch ist, also auf ihrer Oberseite einen geringeren Durchmesser aufweist als auf ihrer Unterseite. Entsprechend dieser Form der Durchlaßscheibe 3 wird das Mikrowellenfenster gemäß dem fünften bevorzugten Ausführungsbeispiel der Erfindung von unten her mit einem Überdruck beaufschlagt.

## Patentansprüche

1. Mikrowellenfenster zur räumlichen Trennung und mikrowellenmäßigen Verbindung eines äußeren Mikrowellenleiters (1) von bzw. mit einem inneren Mikrowellenleiter (2) oder einem Hornstrahler, mit einer mikrowellendurchlässigen Durchlaßscheibe (3) und mit einem der Befestigung der Durchlaßscheibe dienenden metallischen Befestigungsmittel (4),
**dadurch gekennzeichnet,**
**daß** das Befestigungsmittel (4) mit einem Dielektrikum (5) beschichtet ist und die Durchlaßscheibe (3) über das Dielektrikum (5) in das Befestigungsmittel (4) eingeschmolzen oder eingeklebt ist.

2. Mikrowellenfenster nach Anspruch 1, **dadurch gekennzeichnet, daß** das Befestigungsmittel (4) vollständig mit dem Dielektrikum (5) beschichtet ist.

3. Mikrowellenfenster nach Anspruch 1 oder 2 mit einem Hornstrahler, **dadurch gekennzeichnet, daß** die Oberfläche des Hornstrahlers mit einem Dielektrikum (5) beschichtet ist.

4. Mikrowellenfenster nach einem der Ansprüche 1 bis 3, **dadurch gekennzeichnet, daß** die Schichtdicke des Dielektrikums (5) maximal 2 mm beträgt.

5. Mikrowellenfenster nach einem der Ansprüche 1 bis 4, **dadurch gekennzeichnet, daß** das Dielektrikum (5) aus Kunststoff- vorzugsweise aus PTFE, FPA, FEP oder PVDF - besteht.

6. Mikrowellenfenster nach einem der Ansprüche 1 bis 4, **dadurch gekennzeichnet, daß** das Dielektrikum (5) aus Email besteht.

7. Mikrowellenfenster nach einem der Ansprüche 1 bis 6, **dadurch gekennzeichnet, daß** die Dicke der Durchlaßscheibe (3) ein ganzzahliges Vielfaches der Wellenlänge der Mikrowellen beträgt.

8. Mikrowellenfenster nach einem der Ansprüche 1 bis 7, **dadurch gekennzeichnet, daß** die Durchlaßscheibe (3) zur Anpassung des Wellenwiderstandes der Durchlaßscheibe (3) an den Wellenwiderstand der Mikrowellenleiter (1, 2) bzw. des Hornstrahlers wenigstens einen einstückig angeformten Anpassungskörper aufweist.

9. Mikrowellenfenster nach einem der Ansprüche 1 bis 8, **dadurch gekennzeichnet, daß** die Durchlaßscheibe (3) in dem Befestigungsmittel (4) wenigstens in einer Richtung der Normalen der Durchlaßscheibe (3) mittels Formschluß gehalten ist.

10. Mikrowellenfenster nach Anspruch 9, **dadurch gekennzeichnet, daß** die Durchlaßscheibe (3) kreisförmig ist und auf der Seite, auf der sie durch Formschluß gehalten ist, einen geringeren Durchmesser aufweist als auf der gegenüberliegenden Seite.

11. Mikrowellenfenster nach Anspruch 9 oder 10, **dadurch gekennzeichnet, daß** die Durchlaßscheibe (3) eine konische Form aufweist.

12. Mikrowellenfenster nach Anspruch 9 oder 10, **dadurch gekennzeichnet, daß** die Durchlaßscheibe (3) einen stufenförmigen Rand aufweist.
